# EUROPEAN PATENT APPLICATION

(11) **EP 4 106 279 A1**
(43) Date of publication of application: **21.12.2022**
(21) Application number: 21754522.7
(22) Date of filing: 03.02.2021
(51) Int. Cl.: H04L 12/46, H04L 12/749, G06F 13/00

(54) **IOT CONNECTION SYSTEM, INFORMATION PROCESSING METHOD, AND COMPUTER PROGRAM**

(30) Priority: 14.02.2020 JP 2020023198
(71) Applicant: IOT-EX Inc., Tokyo, 101-0043 (JP)
(72) Inventor: MATSUMURA Jun, Tokyo 101-0043 (JP)
(74) Representative: REHBERG HÜPPE + PARTNER
(86) International application number: PCT/JP2021/003983
(87) International publication number: WO 2021/161877

(57) **Abstract**

Attractive services are provided by freely interconnecting loTs via the Internet.

An loT connection system includes an loT hub and an loT router. The loT hub includes at least one of a first driver and a second driver, the first driver being used to connect the loT hub to a private cloud to which a first device is connectable, and the second driver being used to connect a second device and the loT hub, the loT router includes a third driver for connecting a third device and the loT router, and the loT hub executes a continuous connection function for continuously connecting the first device, the second device, the third device, and an loT service that is usable via the loT hub to each other, and a directory function for associating the first device, the second device, the third device, and the loT service with each other.

## Description

### TECHNICAL FIELD

The present disclosure relates to an loT connection system, an information processing method, and a computer program.

### BACKGROUND ART

In recent years, the number of devices that can connect to the Internet and receive various services has begun to increase. Such devices are referred to as Internet of Things (loT) devices.

Since each of such loT devices is generally connected to a dedicated private cloud, it is usually not possible to connect loT devices with different specifications manufactured by different manufacturers to the same private cloud.

In recent years, an loT cloud service referred to as an loT hub capable of connecting loT devices manufactured by various manufacturers by publishing an application programing interface (API) for connection to a cloud and providing a software development kit (SDK) or the like has also been provided (Non Patent Literature 1, Non Patent Literature 2, and the like).

### [Citation List]

### [Non Patent Literature]

[Non Patent Literature 1]
   "Azure loT Hub", Microsoft Corporation, [retrieved on June 2, 2019], the Internet <https://azure.microsoft.com/ja-jp/services/iot-hub/>
[Non Patent Literature 2]
   "AWS loT ", Amazon Web Services, Inc, [retrieved on June 2, 2019], the Internet <https://aws.amazon.com/jp/iot/>

### SUMMARY OF INVENTION

### TECHNICAL PROBLEM

Although the above-mentioned loT cloud services exist, association between the services is limited, and it is necessary for a business operator of an loT device to develop a dedicated connection program for each service and incorporate the program into the device.

For this reason, an object of the present disclosure is to provide attractive services by freely interconnecting the loT in daily life, which is in a siloed state for each private cloud, via the Internet.

### SOLUTION TO PROBLEM

An loT connection system in an embodiment of the present disclosure is an loT connection system that includes an loT hub implemented on a cloud, and an loT router locally located and connected to the loT hub. The loT hub includes at least one of a first driver and a second driver, the first driver being used to connect the loT hub to a private cloud to which a first device is connectable, and the second driver being used to connect a second device and the loT hub, the loT router including a third driver for connecting a third device and the loT router, and the loT hub implementing a continuous connection function for continuously connecting the first device, the second device, the third device, and an loT service that is usable via the loT hub to each other, and a directory function of associating the first device, the second device, the third device, and the loT service with each other.

The directory function may be used to specify the first device, the second device, the third device, or the loT service and give an instruction to the first device, the second device, the third device, or the loT service.

The directory function may be used to specify an association destination device designated by an association source device on the basis of identification information of a device, identification information of a driver, and identification information of a connection interface.

The directory function may be used to further specify the association destination device, on the basis of identification information of the loT hub.

The identification information of the device, the identification information of the driver, and the identification information of the connection interface are stored in a predetermined storage device, and the storage device may further store identification information of a connection source device for which connection is not permitted, and/or a function of the device as a whitelist.

At least one of the first driver, the second driver, and the third driver may implement a virtual device function for virtually reproducing the first device, the second device, or the third device.

The loT hub may further include a Web API for using an loT application.

Information acquired from the first device, the second device, or the third device may not be stored in the loT hub.

The loT router may be able to be remotely controlled by an administrator device.

An information processing method in an embodiment of the present disclosure is an information processing method in an loT connection system including an loT hub implemented on a cloud, and an loT router locally located and connected to the loT hub, the loT hub including at least one of a first driver and a second driver, the first driver being used to connect the loT hub to a private cloud to which a first device is connectable, and the second driver being used to connect a second device and the loT hub, the loT router including a third driver for connecting a third device and the loT router, the information processing method including causing the loT hub to execute a continuous connection step of continuously connecting the first device, the second device, the third device, and an loT service that is usable via the loT hub to each other, and a directory step of associating the first device, the second device, the third device, and the loT service with each other.

A computer program in an embodiment of the present disclosure is a computer program executed by an loT connection system including an loT hub implemented on a cloud, and an loT router locally located and connected to the loT hub, in which the loT hub includes at least one of a first driver and a second driver, the first driver being used to connect the loT hub to a private cloud to which a first device is connectable, and the second driver being used to connect a second device and the loT hub, and the loT router includes a third driver for connecting a third device and the loT router, the computer program causing the loT hub to execute a continuous connection function for continuously connecting the first device, the second device, the third device, and an loT service that is usable via the loT hub to each other, and a directory function for associating the first device, the second device, the third device, and the loT service with each other.

### ADVANTAGEOUS EFFECTS OF INVENTION

According to the present disclosure, it is possible to provide attractive services by freely interconnecting loT in daily life, which is in a siloed state for each private cloud, via the Internet.

According to an embodiment of the present disclosure, not only loT devices that are directly connected to each other, but also loT devices that are connected to a private cloud of the related art can be easily interconnected.

In addition, according to an embodiment of the present disclosure, it is possible to provide an loT connection system, a computer program, and an information processing method which are capable of continuing services even when an loT device cannot be connected to a network due to a power failure or the like.

### BRIEF DESCRIPTION OF DRAWINGS

- **Fig. 1**: is a system configuration diagram illustrating an example of a configuration of an loT connection system according to an embodiment of the present disclosure.
- **Fig. 2**: is an image diagram illustrating an example of a plurality of private clouds of the loT connection system according to the embodiment of the present disclosure.
- **Fig. 3**: is an image diagram illustrating an example of a plurality of first devices connected to the private clouds of the loT connection system according to the embodiment of the present disclosure.
- **Fig. 4**: is an image diagram illustrating an example of a flow of a service provided in the loT connection system according to the embodiment of the present disclosure.
- **Fig. 5**: is a hardware configuration diagram illustrating a hardware configuration of an loT router according to the embodiment of the present disclosure.
- **Fig. 6**: is an image diagram illustrating an example of a flow of a service provided in the loT connection system according to the embodiment of the present disclosure.
- **Fig. 7**: is an image diagram illustrating a connection interface of the loT connection system according to the embodiment of the present disclosure.
- **Fig. 8**: is an image diagram illustrating another example of a flow of a service provided in the loT connection system according to the embodiment of the present disclosure.
- **Fig. 9**: is an image diagram illustrating an example of a flow of a virtual driver function provided in the loT connection system according to the embodiment of the present disclosure.
- **Fig. 10**: is an image diagram illustrating another example of a flow of a virtual driver function provided in the loT connection system according to the embodiment of the present disclosure.
- **Fig. 11**: is a flow diagram illustrating an example of a flow of an information processing method according to the embodiment of the present disclosure.
- **Fig. 12**: is a configuration diagram illustrating a configuration of the loT router and a circuit configuration according to the embodiment of the present disclosure.
- **Fig. 13**: is a system configuration diagram illustrating an example of a configuration of a support system according to another embodiment of the present disclosure.
- **Fig. 14**: is a flow diagram illustrating an example of a flow of a support method according to another embodiment of the present disclosure.
- **Fig. 15**: is a conceptual diagram illustrating an example of a menu card according to another embodiment of the present disclosure.
- **Fig. 16**: is a conceptual diagram illustrating an example of a menu card according to another embodiment of the present disclosure.
- **Fig. 17**: is a conceptual diagram illustrating an example of a menu card according to another embodiment of the present disclosure.

### DESCRIPTION OF EMBODIMENTS

First, an embodiment of an loT connection system in an embodiment of the present disclosure will be described with reference to the drawings.

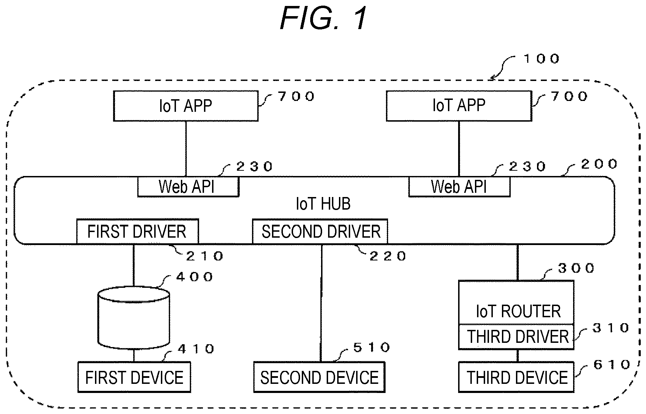

As illustrated in **Fig. 1****,** it is assumed that an loT connection system 100 in an embodiment of the present disclosure includes an loT hub 200 and an loT router 300.

It is assumed that the loT hub 200 is implemented on a cloud. Specifically, the loT hub 200 is a managed service which is hosted in a cloud and functions as a repeater for two-way communication between an loT application (hereinafter referred to as an "loT app") and an loT device.

It is assumed that the loT router 300 is locally located and connected to the loT hub 200 by a wide area network (WAN).

Specifically, the loT router 300 enables an loT device that is not connected to the Internet, such as a home network, to be connected to the loT hub 200.

In addition, the loT hub 200 includes at least one of a first driver 210 and a second driver 220.

The first driver 210 and the second driver 220 absorb differences in specifications for each manufacturer of each loT device.

The first driver 210 is used to connect a private cloud 400 to which the first device 410 is connectable, and the loT hub 200.

As an example, it is preferable that the first device 410 and the private cloud 400 be connected to each other via a local area network (LAN), and the private cloud 400 and the first driver 210 be connected to each other via a WAN.

The private cloud 400 is provided by a business operator of the first device 410. Although Fig. 1 illustrates a case where there is one private cloud 400, the number of private clouds is not limited to one, and a plurality of private clouds 400 can be connected to the loT hub 200. In addition, the loT hub 200 may include a plurality of first drivers 210.

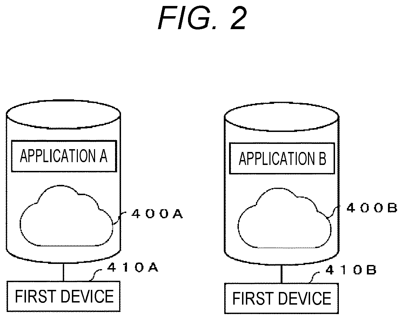

**Fig. 2** illustrates details of two private clouds 400A and 400B that are provided by different business operators A and B. As illustrated in Fig. 2, the private cloud 400A is connected to an application A (hereinafter referred to as an "app A") provided by the business operator A and provides a service according to the app A to the first device 410.

Similarly, the private cloud 400B is connected to an application B (hereinafter referred to as an "app B") provided by the business operator B and provides a service according to the app B to the first device 410.

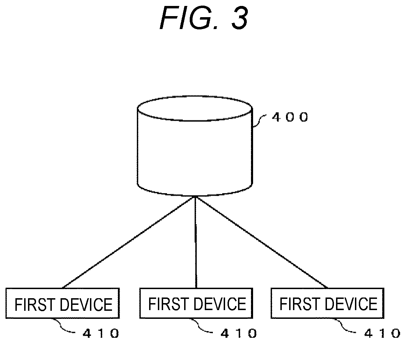

Note that, although Figs. 1 and 2 illustrate an example in which only one first device 410 is connected to the private cloud 400, a plurality of first devices 410 may be connected to one private cloud 400 as illustrated in **Fig. 3****.**

The first device 410 can be set to be a device to which the business operator provides a private cloud. Examples thereof include an electronic lock having a remote lock function, an AI speaker, a care bed that can be operated remotely, and the like, but are not particularly limited thereto.

Referring back to Fig. 1, the second driver 220 directly connects a second device 510 and the loT hub 200.

The second device 510 can be connected to the loT hub 200 on the Internet via a WAN (may be connected via a LAN).

Note that, although Fig. 1 illustrates an example in which only one second device 510 is connected to the second driver 220, a plurality of second devices 510 may be connected to one second driver 220. In addition, the loT hub 200 may include a plurality of second drivers 220.

The second device 510 can be set to be a device to which the business operator does not provide a private cloud. Examples thereof include a fan, an air conditioner, a window, a curtain, lighting, and the like, but are not particularly limited thereto.

In addition, the loT router 300 includes a third driver 310. In addition, the loT router 300 may include a plurality of third drivers 310.

The third driver 310 is used to connect a third device 610 and the loT router 300.

As an example, it is preferable that the third device 610 and the third driver 310 be connected to each other via a LAN, and the loT router 300 and the loT hub 200 be connected to each other via a WAN.

As described above, the third device 610 can be set to be an loT device that is not connected to the Internet such as a home network. In addition, the third device 610 can be set to be a device that should not be directly connected to the loT hub 200 from the viewpoints of security, privacy and safety. As an example, the third device 610 can be set to be a gas stove, a face authentication device, a data logger for collecting sensor information, or the like, but it is not particularly limited thereto. However, the third device 610 may be connected to the loT router 300 irrespective of the kind of the third device 610 from the viewpoint of reducing risk at the time of a disaster to be described later.

In this manner, the loT connection system 100 of the present invention is a hybrid type loT connection system that does not directly connect all devices to the loT hub 200 on the cloud, but connects some devices to the loT router 300 locally.

According to the above description, it is possible to easily interconnect not only loT devices that are directly connected to each other, but also loT devices that are connected to a private cloud of the related art.

Thereby, loT devices manufactured by various manufacturers can be easily interconnected, unlike the related art in which only loT devices manufactured by fixed manufacturers have been connected to each other. In addition, it is possible to create unique services that have never existed before by interconnecting loT devices manufactured by various manufacturers.

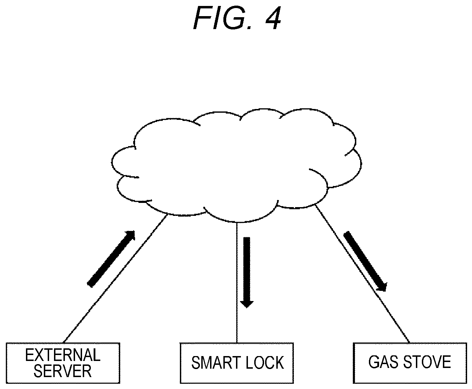

For example, according to the loT connection system 100 of the present invention, as illustrated in **Fig. 4****,** it is also possible to easily implement services such as transmitting a fire extinguishing signal to a gas stove and unlocking a front door when an emergency earthquake bulletin is received from an external server.

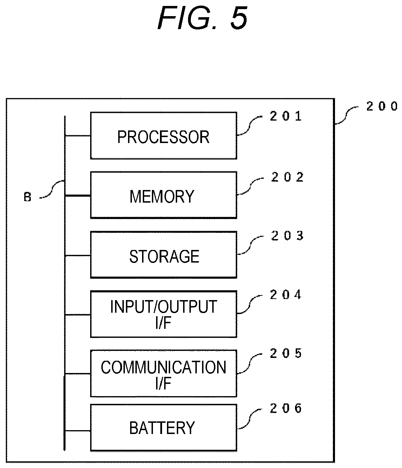

Here, a hardware configuration of an information processing terminal (loT hub) 200 will be described using **Fig. 5****.** The information processing terminal 200 can include a processor 201, a memory 202, storage 203, an input/output interface (input/output I/F) 204, and a communication interface (communication I/F) 205. The components are connected to each other via a bus B.

The information processing terminal 200 can implement functions and methods described in this embodiment through cooperation with the processor 201, the memory 202, the storage 203, the input/output I/F 204, and the communication I/F 205.

The processor 201 executes functions and/or methods implemented by codes or commands included in programs stored in the storage 203. The processor 201 includes, for example, a central processing unit (CPU), a micro processing unit (MPU), a graphics processing unit (GPU), a microprocessor, a processor core, a multiprocessor, an application-specific integrated circuit (ASIC), a field programmable gate array (FPGA), and the like, and may implement each processing disclosed in each embodiment by a logic circuit (hardware) or a dedicated circuit formed in an integrated circuit (IC) chip, a large scale integration (LSI), or the like. In addition, these circuits may be implemented by one or a plurality of integrated circuits, and a plurality of pieces of processing shown in the embodiments may be implemented by one integrated circuit. In addition, the LSI may be sometimes referred to as a VLSI, a super LSI, an ultra LSI, or the like depending on the degree of integration.

The memory 202 temporarily stores a program loaded from the storage 203 and provides a working area for the processor 201. The memory 202 also temporarily stores various data generated while the processor 201 is executing a program. The memory 202 includes, for example, a random access memory (RAM), a read only memory (ROM), and the like.

The storage 203 stores programs. The storage 203 includes, for example, a hard disk drive (HDD), a solid state drive (SSD), a flash memory, and the like.

The communication I/F 205 is mounted as hardware such as a network adapter, communication software, or a combination thereof, and transmits and receives various data via a network. The communication may be executed in either a wired or wireless manner, and any communication protocol may be used as long as mutual communication can be executed. The communication I/F 205 executes communication with other information processing devices via a network. The communication I/F 205 transmits various data to other information processing devices in response to an instruction received from the processor 201. In addition, the communication I/F 205 receives various data transmitted from other information processing devices and transmits it to the processor 201.

The input/output I/F 204 includes an input device for inputting various operations to the information processing terminal 200 and an output device for outputting processing results processed by the information processing terminal 200. In the input/output I/F 304, the input device and the output device may be integrated with each other, or the input device and output device may be separated from each other.

The input device is implemented by any one or a combination of all types of devices that can receive a user's input and transmit information related to the input to the processor 201. The input device includes, for example, a touch panel, a touch display, and hardware keys such as a keyboard, a pointing device such as a mouse, a camera (the input of an operation using images), and a microphone (the input of an operation using sounds).

The output device outputs processing results processed by the processor 201. The output device includes, for example, a touch panel, a speaker, and the like.

The loT router 300 described above can also have the same hardware configuration as that of the loT hub 200 described above.

In addition, it is preferable that the loT router 300 be an information processing terminal that can communicate with a predetermined base station.

As an example, an information processing terminal that can communicate with a predetermined base station is an information processing terminal used by inserting a SIM card, such as a smartphone or a tablet terminal. Since the communication capacity between the loT router 300 and the loT hub 200 is as low as 100 Mbytes or less per month, it is sufficient to insert a low-cost SIM card with a small communication capacity into the loT router 300.

In addition, it is assumed that the loT router 300 includes a battery. Such a battery can store electric power by charging. The loT router 300 can implement the functions in the present disclosure without being connected to a power supply for approximately three days after being fully charged. In normal times (not under a specific situation to be described later), it is assumed that the loT router 300 is used by being connected to a power supply.

In addition, the third device 610 can be connected to the loT hub 200 by a tethering function provided by the loT router 300 under a specific situation.

The specific situation can be a situation where connection between the third device 610 and a predetermined wireless/wired LAN is lost, or the like, but is not limited thereto.

A power failure can be the cause of falling into such a specific situation, but it is not limited thereto, and Wi-Fi (registered trademark) router failures, connection failures, and the like can be the cause thereof.

In addition, known technology can be used as the tethering function, and methods such as Wi-Fi tethering, Bluetooth (registered trademark) tethering, and USB tethering can be used.

According to the above-described configuration, it is possible to provide attractive services by freely interconnecting loT in daily life, which is in a siloed state for each private cloud, via the Internet.

Specifically, according to the present disclosure, not only loT devices that are directly connected to each other, but also loT devices that are connected to a private cloud of the related art can be easily interconnected.

In addition, according to the above-described configuration, the third device 610 can be connected to the loT hub 200 by the tethering function of the loT router 300 under a specific situation, and thus it is possible to continuously use a service even in a state where the loT device cannot be connected to the network due to a disaster or the like.

In addition, it is preferable that the loT router 300 can be remotely controlled by an administrator device. With such a configuration, each loT router can be fully supported.

Note that the above-mentioned remote operation is implemented by installing dedicated applications in both the administrator device and the loT router 300. Note that it is preferable to use an Android terminal for the information processing terminal as the loT router 300 in consideration of the ease of supporting the remote operation.

In addition, the loT router 300 is preferably subjected to connected device management (CDM: various device management) by the administrator device. Such CDM can be implemented using a known mobile device management (MDM) method. With such a configuration, loT routers installed in a large number of households can be centrally managed immediately, remotely monitored, and updated. In addition, CDM enables remote monitoring and control of device settings, application distribution, and updates. Thereby, cost reduction and operational efficiency can be implemented.

In addition, only authenticated applications and devices can be connected to the loT hub 200, but the loT router 300 extends the loT hub 200 locally (inside a house, or the like) to make it possible to secure real-time performance, security, and privacy, and cope with a reduction in communications traffic, and the like that can only be achieved locally.

In addition, by using the loT router 300 as an information processing terminal, there is no need to use a customer's smartphone or an Internet line in a home, and the risk of unexpected troubles occurring can be reduced.

Further, in the loT connection system 100 of the present invention, information to be described by a user to create the first driver 210, the second driver 220, and the third driver 310 may be limited to information related to device definition and command definition.

Here, a method of creating the first driver 210, the second driver 220, and the third driver 310 is described. Note that a creator can be a user related to the manufacturing and development of loT devices, or a user related to the provision of the loT connection system of the present invention.

Note that it is only required that information of the same contents may be described in the first driver 210, the second driver 220, and the third driver 310, and programming languages thereof may be different from each other.

First, the creator defines a list of devices to be used as a device definition. As an example, in a case where "weather sensor", "indoor sensor", "outdoor sensor", "suspicious person sensor", "approval sensor", and "power sensor" are defined as devices to be used, these names and their IDs "weather", "inhouse", "outdoor", "security", "approve", and "power" are described.

Next, the creator defines available commands as command definitions. As an example, in a case where an available command for "outdoor sensor" is defined, an observation command of a sensor value is described. The observation command can be, for example, "observe", "get", "observe the outdoors", and the like.

The creator fills information regarding the above-described device definition and command definition in a program in a fill-in-hole format, and thus the first driver 210, the second driver 220, and the third driver 310 can be completed. The other parts can be provided by a provider as an SDK.

It is assumed that the SDK part includes a part related to device operation processing corresponding to a received command, a part related to preprocessing of collected sensor data/operation result data, and a part related to data transmission processing to an loT hub.

With the above-described configuration, drivers for various types of loT devices can be easily completed, and thus it is possible to implement an loT connection system that can connect the loT devices flexibly and easily.

Engineers related to the development of devices usually have different technical fields from Web development engineers, and many of them do not have a technical level to connect devices to an loT hub.

For this reason, as in the present disclosure, it is extremely useful to be able to create the drivers by a simple method in a fill-in-hole format common to any driver program. Thereby, it is possible to more reduce development costs and a development period related to connection of loT devices to an loT hub than in the related art.

In addition, even when there is a difference in an allowable value of costs due to a reduction in development costs as in an electric fan and an air conditioner, it is possible to implement connection to an loT hub equally.

Next, connection between the loT hub 200 and an loT app related to the loT connection system 100 in the present disclosure will be described.

As illustrated in Fig. 1, the loT hub 200 can have a Web API 230 for using an loT app 700. Note that, as illustrated in Fig. 1, the loT apps 700 can be connected as many times as the number of services and can be connected using the respective Web APIs 230.

The loT app 700 is created by describing data acquisition logic from an loT device (sensor) and/or operation logic of the loT device in an application.

The data acquisition logic is constituted by a part that preprocesses acquired sensor data and a part that transmits the sensor data to the API of the loT hub 200. Required information includes a connection destination URL provided by an operator of the loT connection system 100, an API key provided by the operator, device information, and an execution command.

The device operation logic is constituted by a part that preprocesses a device command desired to be operated and a part that transmits the device command to the API of the loT hub 200. Required information includes a connection destination URL provided by the operator of the loT connection system 100, an API key provided by the operator, device information, and an execution command.

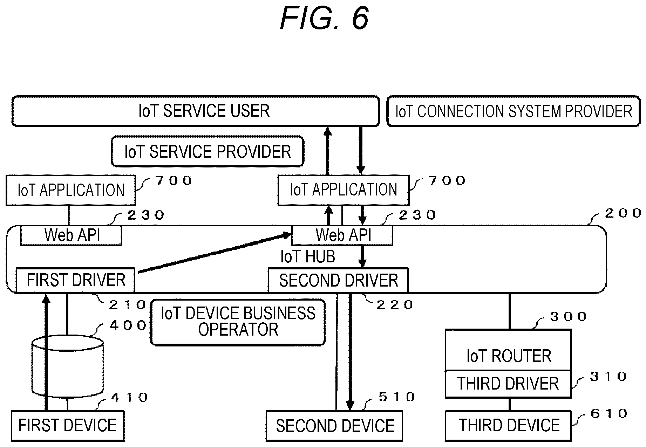

**Fig. 6** is a diagram illustrating a flow in which an loT service user (end user) receives an loT service provided by an loT service provider by using an loT device provided by an loT device business operator. As illustrated in Fig. 6, first, when the first device 410 gives notice of an event, the end user is notified of the event through the private cloud 400, the first driver 210, the Web API 230, and the loT app 700.

Subsequently, when the end user determines an action, the second device 510 is instructed to execute the action through the loT app 700, the Web API 230, and the second driver 220.

The association of loT devices can be expressed by an event-driven program such as "When ~ happens, do AA". In addition, this processing can be implemented as a function of Function as a Service (FaaS) after commercializing the processing as a microservice so that the processing can be shared and used.

Incidentally, the first to third devices, which are the above-described loT devices, have been developed and manufactured by various manufacturers according to the recent development of an loT field. However, there has been a problem that continuous connection to a device or an loT app is limited to devices that can be connected to servers for push notification services provided by major vendors such as Google and Apple.

The loT hub 200 in the present disclosure is characterized by implementing a continuous connection function and a directory function for the purpose of associating all loT devices.

The continuous connection function is a function of continuously connecting the first device 410, the second device 510, the third device 610, an loT service (loT app 700) that can be used via the loT hub 200 to each other.

However, there are two types of loT devices connected to an loT hub, that is, those that do not necessarily require continuous connection and those that necessarily require continuous connection. The former includes a sensor-based device that periodically or irregularly transmits information. The latter includes devices such as controllable devices that need to be remotely controlled. Accordingly, it is only required that the continuous connection function in the present disclosure implements continuous connection for the latter loT device that necessarily requires continuous connection, and implements connection limited to the time required for the former loT device that does not necessarily require continuous connection.

The continuous connection function can make it possible to implement the loT hub 200, the first device 410, the second device 510, the third device 610, and the loT service 700 in the present disclosure using a communication protocol such as message queue telemetry transport (MQTT) for loT.

In addition, the directory function associates the first device 410, the second device 510, the third device 610, and an loT service with each other.

That is, the directory function implements a function of specifying a thing or a service from a certain thing (device) to a certain service, from a certain service to a certain thing, from a certain thing to a certain thing and giving an instruction to the thing or the service.

In addition, the directory function makes it possible to specify an association destination device designated by an association source device on the basis of identification information of the device, identification information of a driver, and identification information of a connection interface.

The identification information of the device is a universally unique identifier (UUID) of the loT device. The identification information of the driver is an ID of the driver. The identification information of the connection interface is information for specifying an R interface which is an interface between the driver and the loT hub.

In addition, the directory function can further specify an association destination device on the basis of identification information of the loT hub 200.

Note that the identification information of the device, the identification information of the driver, and the identification information of the connection interface are stored in a predetermined storage device, and the storage device can further store identification information of a connection source device for which connection is not permitted, and/or a function of the device as a whitelist. For such a list, a menu card of a support method to be described later can be used.

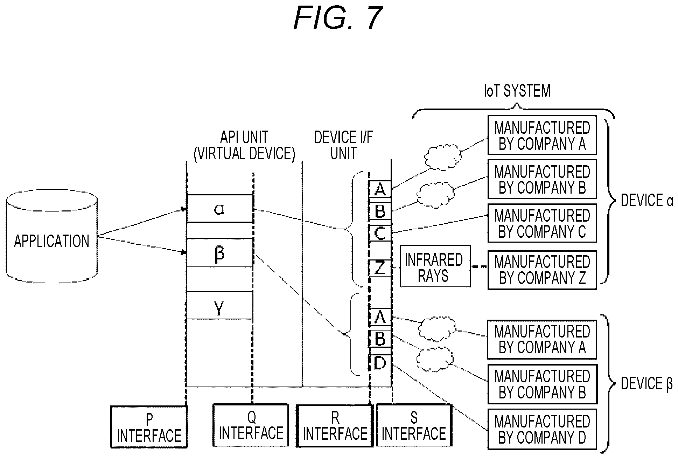

**Fig. 7** is a conceptual diagram illustrating the structure of an interconnection infrastructure in the loT connection system in the present disclosure. As illustrated in Fig. 7, a connection surface between an loT app shown as an application and an loT hub is a P-interface, but can have a standardized Q-interface by connection using a Web API (α, β, γ).

Similarly, a connection surface between an loT device and an loT hub is an S-interface, but can have a standardized R-interface by connection using drivers (A to Z).

In the related art, an loT app needs to designate an loT device serving as a destination on the loT app side in order to transmit and receive information to and from an embedded application of an loT device, and the loT device side also needs to have identification information that can be designated by the loT app.

On the other hand, in the loT connection system of the present disclosure, the destination is designated by a directory function implemented by the loT hub.

For example, addition or replacement of an loT device can be handled only by adding a driver to the loT hub and adding or switching a connection destination, and it is not necessary to modify the loT app itself.

That is, a destination part for designating an loT device required in the loT app, and an identification information part that can be designated from the loT app required in the loT device can be aggregated in any loT hub.

For this reason, the addition or replacement of loT devices does not increase the man-hours of application developers and leads to cost reduction.

In this manner, according to the loT connection system in the present disclosure, it is possible to implement protocol-free interconnection by connection to the loT hub even when the manufacturers and models of loT devices are different.

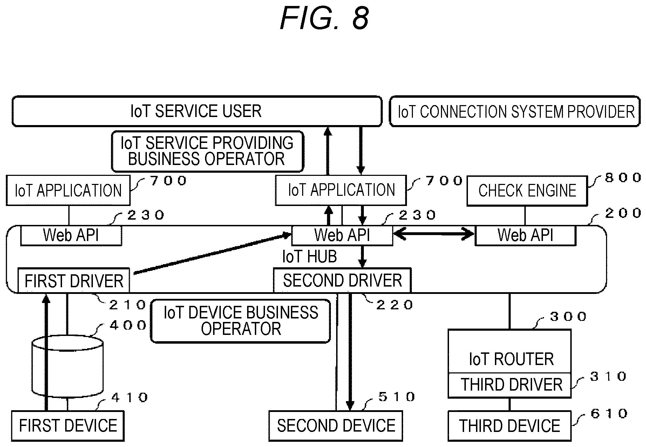

In addition, as illustrated in **Fig. 8****,** the loT hub 200 of the present invention can be connected to a checkpoint 800. The checkpoint 800 is used to check what instruction the loT hub 200 gives to a device and prevent an inappropriate action from being executed.

For example, in a case where an loT service such as "when the outside air is fresh, turn off the air conditioner and open the window" is provided, there is a concern that the room may get wet when guerrilla heavy rain hits immediately after, but the checkpoint 800 is used to prevent such a threat derived from loT.

In addition, at least one of the first driver 210, the second driver 220, and the third driver 310 of the present invention can implement a virtual device function.

The virtual device function virtually reproduces the first device 410, the second device 510, or the third device 610.

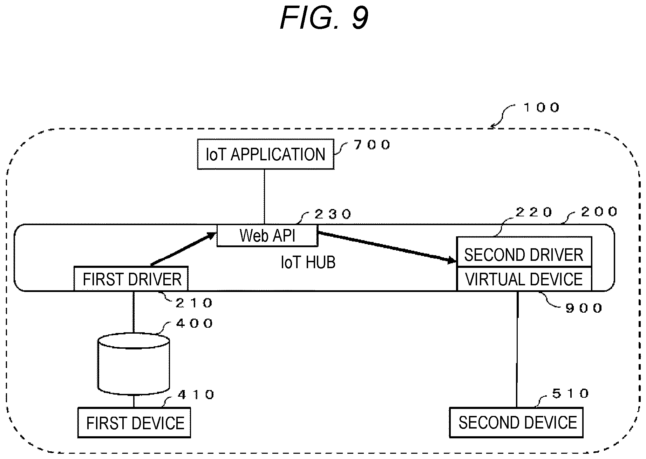

**Fig. 9** illustrates an example in which the second driver 220 of the present invention implements a virtual device function. As illustrated in Fig. 9, the second driver 220 is provided with a virtual device 900 that can reproduce the transmission and reception of a command of the second device 510, and thus it is possible to develop an loT app using the second device 510 even when the second device 510 is not connected. In addition, when there is an operation failure, it is possible to easily perform failure isolation regarding which one of the second device 510 and the loT hub 200 has failed without going to the site.

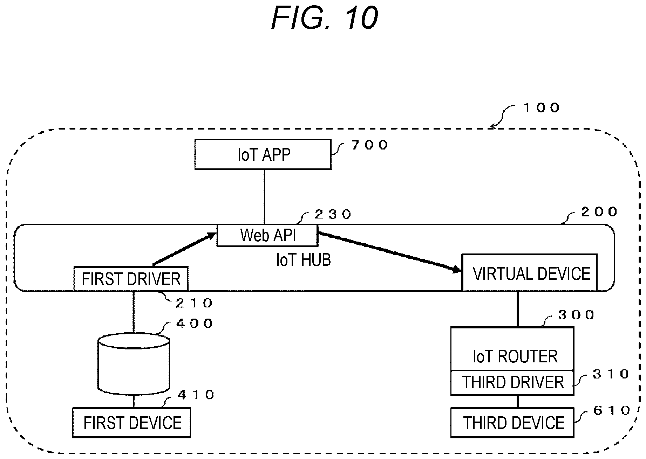

Further, in the present invention, as illustrated in **Fig. 10****,** the loT hub 200 may implement the virtual device function instead of the driver. This is an effective means for failure isolation of the third device 610 connected to the locally existing loT router 300.

As described above, the loT hub in the present disclosure is a protocol-free infrastructure that enables interconnection between clouds by an interface called a driver even when the clouds use different communication protocols. In addition, it is also possible to combine and connect a plurality of applications and loT devices in a complex manner with the directory function.

As an example, the loT hub in the present disclosure can also be applied to electric vehicle charging services.

In recent years, it has been common practice to generate solar power at home and charge an electric vehicle with the surplus power generated. An electric vehicle used for commutation or the like starts charging when a user inserts a predetermined charging plug when the electric vehicle returns to a garage.

However, there is a problem that it is difficult to charge an electric vehicle at an appropriate timing because a user is often not at home with the electric vehicle at the point in time when surplus power, which is usually generated during the daytime, is generated.

For this reason, it is possible to charge electric vehicles at charging spots installed in the city, but the inconvenience of having to purchase electricity at the charging spots occurs in spite of the generation of surplus electricity at home.

Such inconvenience can be resolved by applying the loT connection system of the present disclosure. Specifically, an loT sensor that detects surplus power generation is installed in a power generation system at home. In a case where the surplus power generation is detected by the loT sensor, charging of an electric vehicle connected to another charging device is started through the loT hub in the present disclosure.

In this manner, according to the loT connection system of the present disclosure, it is possible to associate services such as charging services of a solar power generation system and an electric vehicle provided by different business operators.

Subsequently, an embodiment of an information processing method in the present disclosure will be described with reference to the drawings.

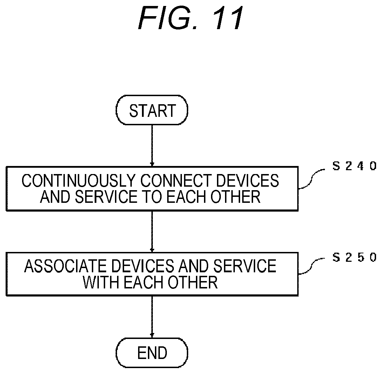

The information processing method in the present disclosure is an information processing method in an loT connection system including an loT hub implemented on a cloud and an loT router locally located and connected to the loT hub as illustrated in **Fig. 11****,** and is characterized by having the loT hub execute a continuous connection step S240 and a directory step S250.

As illustrated in Fig. 1, the loT hub includes at least one of the first driver for connecting a private cloud to which the first device is connectable and the loT hub, and the second driver for connecting the second device and the loT hub, and the loT router includes the third driver for connecting the third device and the loT router.

In the continuous connection step S240, the first device, the second device, the third device, and an loT service that can be used via the loT hub are continuously connected to each other..

In the directory step S250, the first device, the second device, the third device, and the loT service are associated with each other.

According to the above description, it is possible to easily interconnect not only loT devices that are directly connected to each other, but also loT devices that are connected to a private cloud of the related art.

Subsequently, an embodiment of a computer program in the present disclosure will be described with reference to the drawings.

The computer program in the present disclosure is a computer program executed by the loT connection system including the loT hub implemented on the cloud and the loT router locally located and connected to the loT hub, and is characterized by causing the loT hub to execute a continuous connection function and a directory function.

The loT hub includes at least one of the first driver for connecting a private cloud to which the first device is connectable and the loT hub, and the second driver for connecting the second device and the loT hub.

The loT router includes the third driver for connecting the third device and the loT router.

The continuous connection function is used to continuously connect the first device, the second device, the third device, and an loT service that can be used via the loT hub to each other.

The directory function is used to associate the first device, the second device, the third device, and the loT service with each other.

According to the above description, it is possible to easily interconnect not only loT devices directly connected to each other, but also loT devices connected to a private cloud of the related art.

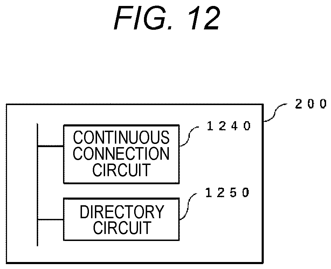

The above-described functions can be implemented by a continuous connection circuit 1240 and a directory circuit 1250 illustrated in **Fig. 12****.**

Further, in the loT connection system 100 of the present invention, information acquired from the first device 410, the second device 510, or the third device 610 cannot be stored in the loT hub 200.

The loT connection system 100 of the present invention is assumed to be operated by a telecommunications business operator. Since the telecommunications business operator is obliged to observe the secret of communication, information acquired from various devices is not stored for the purpose of other utilization.

Since this information is useful information, it is normal for each company's private cloud to enclose loT devices in order to acquire such information exclusively.

On the other hand, the loT connection system 100 of the present invention can interconnect loT devices and an loT app from a neutral standpoint and promote loT business by being operated by a telecommunications business operator.

In addition, since the continuity of an loT interconnection service affects the continuity of loT services of companies that use it, it is preferable that the companies that use it jointly share interconnection infrastructure.

Further, in the loT connection system 100 of the present invention, only devices and loT apps permitted by API keys and authentication schemes can be connected to the loT hub 200. That is, the loT connection system 100 of the present invention can construct a closed network dedicated to loT communication on the Internet. In addition, a communication path is also encrypted and the loT router is managed using a mobile device management (MDM) method, and thus it is also possible to cope with new attack methods, and an OS vulnerability or an application vulnerability.

In addition, in order to connect a device that has not been converted to loT to the loT hub 200, development can be performed in a short period of time by using Backend as a service (BaaS) and an SDK.

In addition, the provider of the loT connection system 100 can propose an interconnection support service for an loT device. Specifically, it is possible to provide business matching and consulting services. That is, in order to add value, it is possible to find a necessary partner, introduce a value creation pattern and best practices, and the like.

In addition, it is possible to create attractive services by combining with other companies' devices and applications and expand business by appealing for added value.

Subsequently, an embodiment of a support method which is another embodiment in the present disclosure will be described.

The support method in another embodiment of the present disclosure is a support method for supporting the creation of new services in which functions of a plurality of devices are combined, via an loT hub to which the plurality of devices are connected.

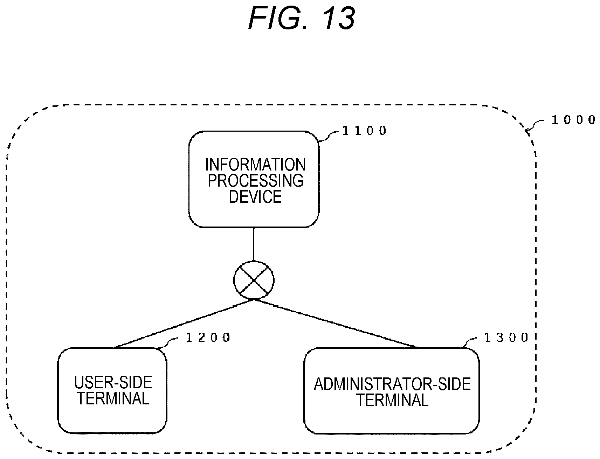

The above-described support method is executed in a support system illustrated in **Fig. 13****.** A support system 1000 illustrated in Fig. 13 can include an information processing device 1110 , a user-side terminal 1120, and an administrator-side terminal 1130.

Hereinafter, description will be given on the assumption that a connection business operator (company B) that applies for association is a first user, a connection business operator (company A) to which the first user applies for association is a second user, and a business operator (company C) that intermediates between the first user and the second user is a third user.

As an example, it is assumed that the first user is a user who provides a face authentication device, and the second user is a user who provides an electronic lock device.

In addition, the first user is set to be a person who attempts to create a service for associating a face authentication function, which is a function of the face authentication device, with a door lock open/close function, which is a function of the electronic lock device, to unlock the door when permitted by the face authentication function.

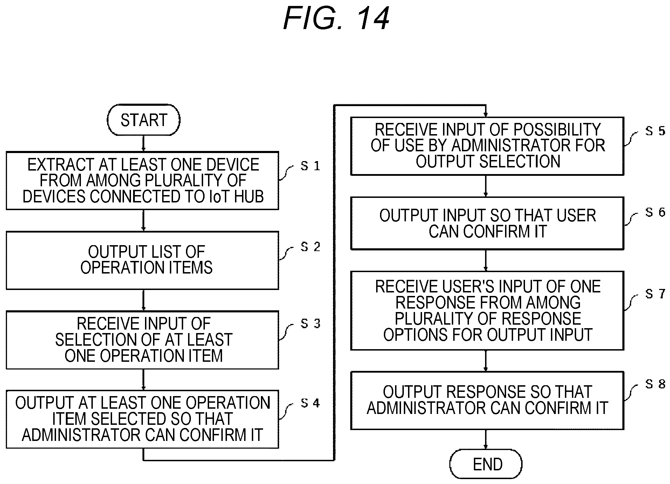

Here, the support method of the present invention causes the information processing device 1110 to execute an extraction step S1, as illustrated in **Fig. 14****.**

In the extraction step S1, at least one device capable of implementing a function requested by a user (first user) is extracted from among the plurality of devices connected to the loT hub.

For example, in a case where the function requested by the first user is the door lock open/close function, a device having such a function, for example, the electronic lock device of the second user, is extracted. Note that a plurality of devices may be extracted as a device having the door lock open/close function.

Further, in order to perform the above-described extraction, it is assumed that a database related to device information is stored in a storage device included in the information processing device 1110 or connected to the information processing device 1110.

It is assumed that pieces of information such as the ID, name, function, and provider of a device are associated with each other as device information in the database. Note that the information included in the device information is not limited thereto, and various information can be associated as device information.

Further, the input of the function requested by the first user may be selected from previously prepared function items that can be provided. Such function items can be automatically generated on the basis of the database.

Alternatively, in the extraction step S1, it is assumed that at least one device is extracted from the plurality of devices connected to the loT hub on the basis of the user's designation.

The above-described configuration is effective when the first user has specified in advance a device with which the first user desires to perform association.

Further, as illustrated in **Fig. 14****,** the support method of the present invention further includes a list output step S2, a selection reception step S3, a selection output step S4, a possibility reception step S5, an input/output step S6, a response reception step S7, and a transmission step S8.

In the list output step S2, a list of device operation items extracted in the extraction step S1 is output so that the user can confirm them.

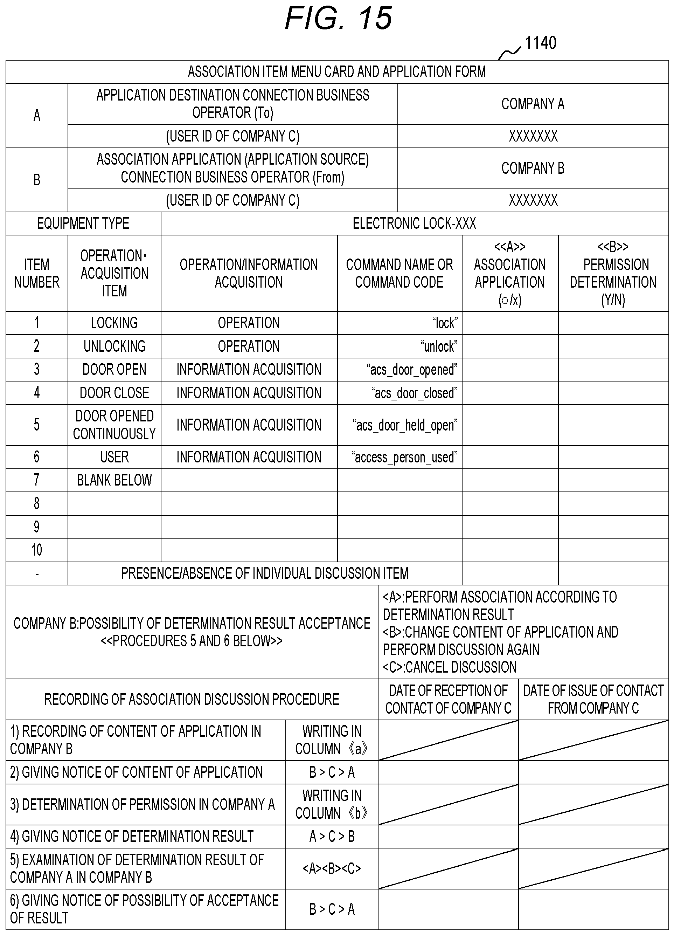

**Fig. 15** illustrates an image of an association item menu card and application form 1140 (hereinafter referred to as a "menu card 1140") that includes a list of operation items. The menu card 1140 is output to the user-side terminal 1120 that can be confirmed by the user and displayed on a display screen of the user-side terminal 1120, but the menu card 1140 can also be used by being output to a paper medium. In Fig. 15, the first user is shown as a company B, the second user is shown as a company A, and the third user is shown as a company C.

Further, in Fig. 15, the list of operation items is described in the column of "operation/acquisition item". Note that it is assumed that an "acquisition item" is included in the operation items in the present invention as an operation of acquiring information.

In addition, whether an item is related to "operation" or "information acquisition" is also described in association with the operation item. In addition, a "command name" or a "command code" required for association may also be described in advance.

Further, in the selection reception step S3, an input of selection of at least one operation item by the user from the list of the operation items output in the list output step S2 is received.

As an example, the user inputs "o" or "x" in an association application column of the menu card 1140 as illustrated in Fig. 15. Such an input can be performed by operating the user-side terminal 1120 or by being written on the output paper medium. In the latter case, it is preferable that the selection written on the paper medium be input to the information processing device 1110 by the third user.

In the selection output step S4, at least one operation item selected by the user based on the input received in the selection reception step S3 is output so that the administrator of the device extracted in the extraction step can confirm it.

As an example, it is assumed that the menu card 1140 having the association application column filled in, as illustrated in Fig. 15, is output to the administrator-side terminal 1130 that can be confirmed by the administrator and is displayed on the display screen of the administrator-side terminal 1130, but the menu card 1140 can also be used by being output to a paper medium.

In the possibility reception step S5, the input of the possibility of use by the administrator for the selection output in the selection output step S4 is received.

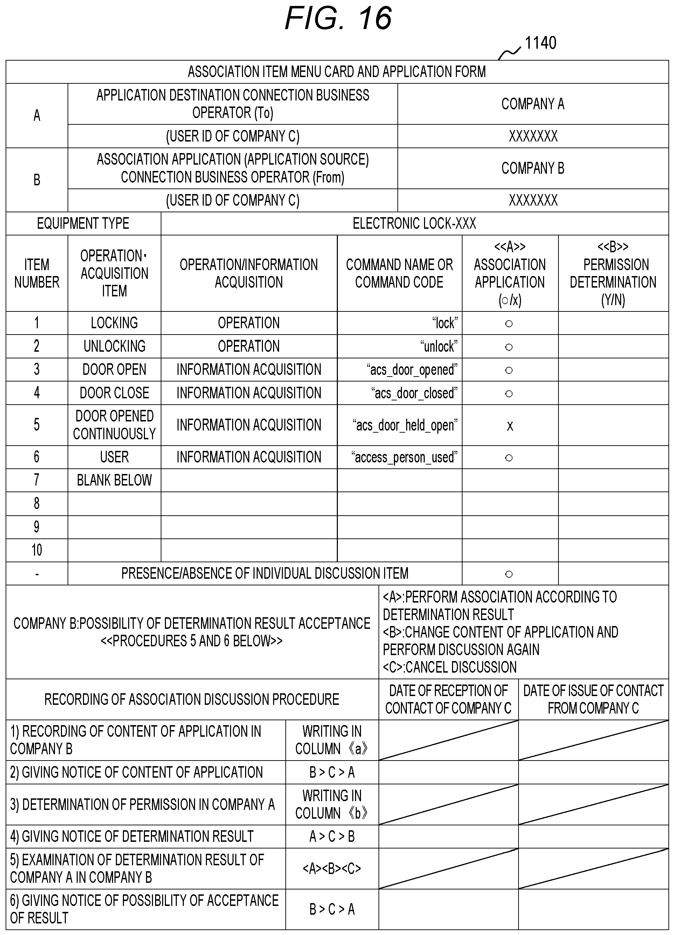

As an example, as illustrated in **Fig. 16****,** the administrator inputs "Y (YES)", "N (NO)", or "n/a (not available)" in a permission determination column of the menu card 1140. Such an input can be performed by operating the administrator-side terminal 1130 or by being written on the output paper medium. In the latter case, it is preferable that the selection written on the paper medium be input to the information processing device 1110 by the third user.

In the input/output step S6, the input received in the possibility reception step S5 is output so that the user can confirm it.

As an example, it is assumed that the menu card 1140 having the permission determination column filled in, as illustrated in Fig. 16, is output to the user-side terminal 1120 that can be confirmed by the user and is displayed on the display screen of the user-side terminal 1120, but the menu card 1140 can also be used by being output to a paper medium.

In the response reception step S7, the user's input of one response is received from among a plurality of response options for the input output in the input/output step S6.

As an example, the user selects a response from "<A>: Perform association according to determination result", "<B>: Change content of application and perform discussion again" or "<C>: Cancel discussion." Such an input of selection can be performed by operating the user-side terminal 1120 or by being written on the output paper medium. At this time, it is preferable that the selection written on the paper medium be input to the information processing device 1110 by the third user.

In the transmission step S8, the response received in the response reception step S7 is output so that the administrator can confirm it.

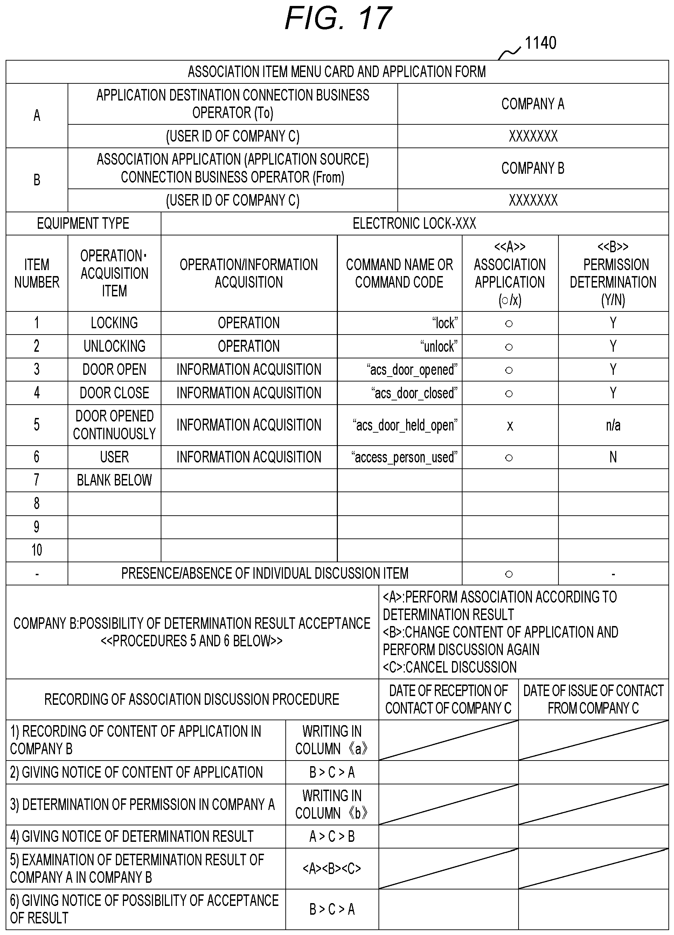

As an example, it is assumed that the menu card 1140 having the response filled in, as illustrated in **Fig. 17****,** is output to the administrator-side terminal 1130 that can be confirmed by the administrator and is displayed on the display screen of the administrator-side terminal 1130, but the menu card 1140 can also be used by being output to a paper medium.

According to the above-described configuration, it is possible to provide a technical improvement for solving or mitigating at least some of the above-described problems of the related art. In addition, according to the above-described configuration, it is possible to efficiently create new services in which functions of a plurality of devices are combined.

Further, in the extraction step S1, at least one device capable of implementing a function requested by the user (first user) is automatically extracted from the plurality of devices connected to the loT hub, and thus it is possible to reduce the burden on work of extracting a device which is an association destination and efficiently create new services.

In addition, the information processing device (third user) mediates the menu card, and thus it is possible to reduce the burden on work related to a contract and efficiently create new services.

In addition, as an embodiment of the present invention, as described above, in the list output step S2, the information processing device may output the list of device operation items extracted in the extraction step to the user-side terminal that can be confirmed by the user.

Further, in the selection reception step S3, the information processing device 1110 may receive the user's input of selection of at least one operation item from the list of operation items output in the list output step S2 from the user-side terminal 1120.

Further, in the input/output step S6, the information processing device 1110 may output the input received in the possibility reception step S5 to the user-side terminal 1120 that can be confirmed by the user.

Further, in the response reception step S7, the information processing device 1110 may receive the user's input of one response from among the plurality of response options for the input output in the input/output step S6 via the user-side terminal 1120.

Further, in the selection output step S4, the information processing device 1110 may output at least one operation item selected by the user to the administrator-side terminal 1130 that can be confirmed by the administrator of the device extracted in the extraction step S1 on the basis of the input received in the selection reception step S3.

Further, in the possibility reception step S5, the information processing device 1110 may receive an input of the possibility of use by the administrator for the selection output in the selection output step S4 from the administrator-side terminal 1130.

Further, in the transmission step S8, the information processing device 1110 may output the response received in the response reception step S7 to the administrator-side terminal 1130 that can be confirmed by the administrator.

According to the above-described configuration, it is possible to provide a technical improvement for solving or mitigating at least some of the above-described problems of the related art. In addition, according to the above-described configuration, it is possible to efficiently create new services in which functions of a plurality of devices are combined.

Although some embodiments of the present invention have been described, these embodiments are presented as examples and are not intended to limit the scope of the invention. These novel embodiments can be embodied in various other forms, and various omissions, replacements, and modifications can be made without departing from the scope of the invention. These embodiments and their modifications are included in the scope and gist of the invention, and are included in the scope of the invention described in the claims and equivalents thereof.

In addition, the methods described in the embodiment can be stored in a storage medium such as a magnetic disk (a floppy (registered trademark) disk, a hard disk, or the like), an optical disk (CD-ROM, DVD, MO, or the like), or a semiconductor memory (a ROM, a RAM, a flash memory, or the like) as a program that can be executed by a computer, and can be transmitted and distributed via a communication medium. Note that the programs stored on the medium side also include a setting program for configuring software means (including not only execution programs but also tables and data structures) executed by the computer in the computer. The computer that implements the present device reads a program recorded on a recording medium, constructs software means by the setting program if necessary, and executes the above-described processing by controlling an operation by the software means. Note that the recording medium mentioned in the present specification is not limited to being used for distribution, and includes a storage medium such as a magnetic disk or a semiconductor memory provided inside the computer or in equipment connected via a network. A storage unit may function as, for example, a main storage device, an auxiliary storage device, or a cache memory.

### LIST OF REFERENCE NUMERALS

- 100: loT connection system
- 200: loT hub
- 210: First driver
- 220: Second driver
- 230: Web API
- 300: loT router
- 310: Third driver
- 400: Private cloud
- 410: First device
- 510: Second device
- 610: Third device
- 700: loT app
- 800: Checkpoint
- 900: Virtual device

## Claims

1. An loT connection system comprising:
an loT hub implemented on a cloud; and
an loT router locally located and connected to the loT hub,
wherein the loT hub includes at least one of a first driver and a second driver, the first driver being used to connect the loT hub to a private cloud to which a first device is connectable, and the second driver being used to connect a second device and the loT hub,
the loT router includes a third driver for connecting a third device and the loT router, and
the loT hub implements a continuous connection function for continuously connecting the first device, the second device, the third device, and an loT service that is usable via the loT hub to each other, and a directory function for associating the first device, the second device, the third device, and the loT service with each other.

2. The loT connection system according to claim 1, wherein the directory function is used to specify the first device, the second device, the third device, or the loT service and give an instruction to the first device, the second device, the third device, or the loT service.

3. The loT connection system according to claim 1 or 2, wherein the directory function is used to specify an association destination device designated by an association source device on the basis of identification information of a device, identification information of a driver, and identification information of a connection interface.

4. The loT connection system according to claim 3, wherein the directory function is used to further specify the association destination device, on the basis of identification information of the loT hub.

5. The loT connection system according to claim 3 or 4, wherein the identification information of the device, the identification information of the driver, and the identification information of the connection interface are stored in a predetermined storage device, and
the storage device further stores identification information of a connection source device for which connection is not permitted, and/or a function of the device as a whitelist.

6. The loT connection system according to any one of claims 1 to 5, wherein at least one of the first driver, the second driver, and the third driver implements a virtual device function for virtually reproducing the first device, the second device, or the third device.

7. The loT connection system according to any one of claims 1 to 6, wherein the loT hub further includes a Web API for using an loT application.

8. The loT connection system according to any one of claims 1 to 7, wherein information acquired from the first device, the second device, or the third device is not stored in the loT hub.

9. The loT connection system according to any one of claims 1 to 8, wherein the loT router is able to be remotely controlled by an administrator device.

10. An information processing method in an loT connection system including an loT hub implemented on a cloud, and an loT router locally located and connected to the loT hub, the loT hub including at least one of a first driver and a second driver, the first driver being used to connect the loT hub to a private cloud to which a first device is connectable, and the second driver being used to connect a second device and the loT hub, the loT router including a third driver for connecting a third device and the loT router, the information processing method comprising:
causing the loT hub to execute a continuous connection step of continuously connecting the first device, the second device, the third device, and an loT service that is usable via the loT hub to each other, and a directory step of associating the first device, the second device, the third device, and the loT service with each other.

11. A computer program executed by an loT connection system including an loT hub implemented on a cloud, and an loT router locally located and connected to the loT hub,
wherein the loT hub includes at least one of a first driver and a second driver, the first driver being used to connect the loT hub to a private cloud to which a first device is connectable, and the second driver being used to connect a second device and the loT hub,
the loT router includes a third driver for connecting a third device and the loT router, and
the computer program causes the loT hub to execute a continuous connection function for continuously connecting the first device, the second device, the third device, and an loT service that is usable via the loT hub to each other, and a directory function for associating the first device, the second device, the third device, and the loT service with each other.
